(19) Europäisches Patentamt European Patent Office Office européen des brevets

(11) **EP 4 734 552 A1**

(12) **EUROPEAN PATENT APPLICATION**
published in accordance with Art. 153(4) EPC

(43) Date of publication:
**29.04.2026 Bulletin 2026/18**

(21) Application number: **24847586.5**

(22) Date of filing: **18.03.2024**

(51) International Patent Classification (IPC):
**H04R 9/06** (2006.01)

(52) Cooperative Patent Classification (CPC):
**H04R 9/02; H04R 9/06**

(86) International application number:
**PCT/CN2024/082255**

(87) International publication number:
**WO 2025/025620 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 CN 202310956661**

(71) Applicant: **Honor Device Co., Ltd.**
**Shenzhen, Guangdong 518040 (CN)**

(72) Inventors:
• **WU, Jiang**
**Shenzhen, Guangdong 518040 (CN)**
• **JIANG, Yuanwu**
**Shenzhen, Guangdong 518040 (CN)**
• **LIU, Wei**
**Shenzhen, Guangdong 518040 (CN)**
• **WANG, Chuanguo**
**Shenzhen, Guangdong 518040 (CN)**
• **LIU, Yuhong**
**Shenzhen, Guangdong 518040 (CN)**

(74) Representative: **MERH-IP Matias Erny Reichl Hoffmann**
**Patentanwälte PartG mbB**
**Paul-Heyse-Straße 29**
**80336 München (DE)**

(54) **LOUDSPEAKER MODULE AND ELECTRONIC DEVICE**

(57) Embodiments of this application provide a speaker module and an electronic device, and relate to the technical field of electronic devices, to prevent the electronic device from producing harsh sound when using a speaker for sound production, thereby improving user experience. The electronic device includes an overall housing and at least one speaker, the overall housing has an overall cavity, and the speaker is located inside the overall cavity. A sound outlet hole is provided on the overall housing. The speaker includes a speaker kernel, a front cavity, and a rear cavity, the front cavity has a sound outlet channel, and the sound outlet channel is in communication with the sound outlet hole. The speaker further includes an auxiliary cavity, and at least a part of the auxiliary cavity is located on a side of the front cavity facing away from the speaker kernel. The auxiliary cavity includes a transmission channel and a silencing cavity in communication with the transmission channel, the transmission channel is in communication with the front cavity through an auxiliary hole, and the auxiliary hole is covered with a damping structure.

FIG. 6

## Description

This application claims priority to Chinese Patent Application No. 202310956661.0, entitled "SPEAKER MODULE AND ELECTRONIC DEVICE" filed with the China National Intellectual Property Administration on July 31, 2023, which is incorporated herein by reference in its entirety.

## TECHNICAL FIELD

This application relates to the technical field of electronic devices, and in particular, to a speaker module and an electronic device.

## BACKGROUND

A speaker, configured to restore an audio electrical signal such as music or speech into sound, can support a function of external audio playback, and is widely used in an electronic device such as a mobile phone, a tablet computer, or a notebook computer.

However, when the speaker is used to produce sound, the electronic device that uses the speaker sometimes produces harsh sound, affecting user experience.

## SUMMARY

To resolve the foregoing technical problem, this application provides a speaker module and an electronic device, so as to prevent the electronic device from producing harsh sound when using a speaker for sound production, thereby improving user experience.

According to a first aspect, embodiments of this application provide an electronic device, where the electronic device includes an overall housing and at least one speaker, the overall housing defines an overall cavity, and the speaker is located inside the overall cavity; a sound outlet hole is provided on the overall housing; the speaker includes a speaker kernel, a front cavity, and a rear cavity, the front cavity has a sound outlet channel, and the sound outlet channel is in communication with the sound outlet hole; the speaker further includes an auxiliary cavity, and at least a part of the auxiliary cavity is located on a side of the front cavity facing away from the speaker kernel; and the auxiliary cavity includes a transmission channel and a silencing cavity in communication with the transmission channel, the transmission channel is in communication with the front cavity through an auxiliary hole, and the auxiliary hole is covered with a damping structure.

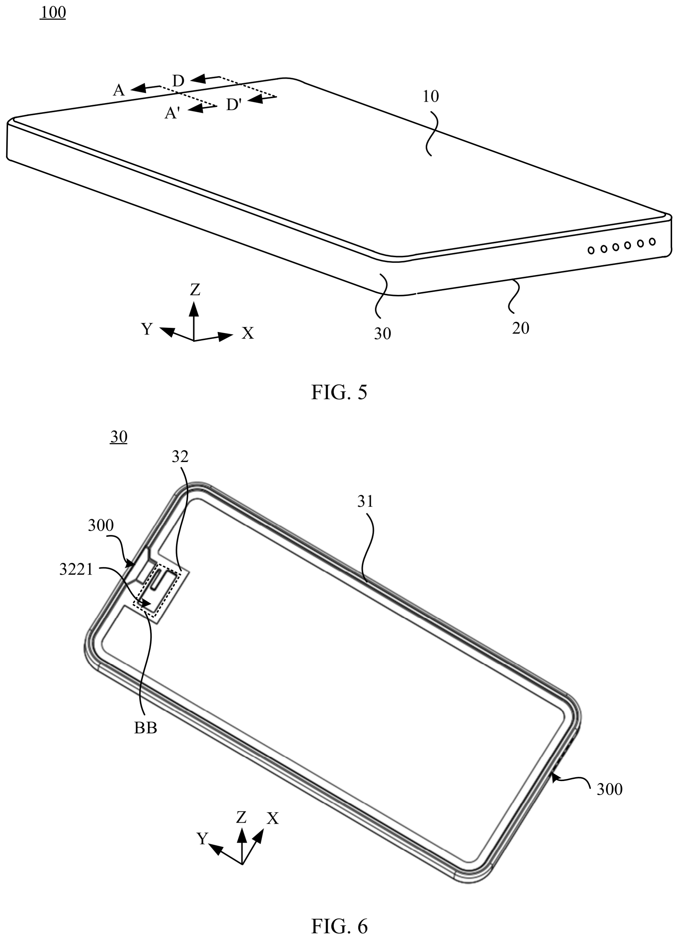

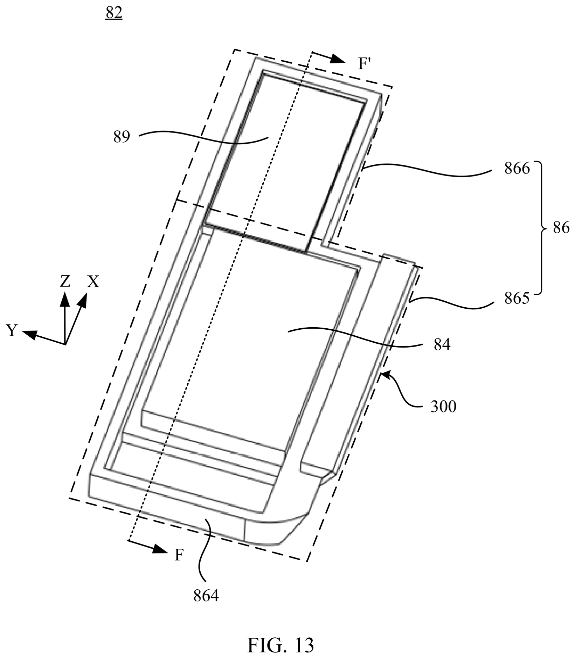

By providing at least a part of the auxiliary cavity on a side of the front cavity facing away from the speaker kernel, the auxiliary cavity is in communication with the front cavity through the auxiliary hole, and the auxiliary hole is covered with the damping structure. Compared with a case in which the auxiliary hole is provided on a side wall of the front cavity of the speaker module, and the auxiliary cavity is located on a side of the front cavity, for the electronic device provided in embodiments of this application, the damping structure may be disposed on the auxiliary hole (if the auxiliary cavity is provided on a side of the front cavity, the damping structure cannot be disposed), so as to enhance damping, thereby improving performance of the speaker. In addition, compared with a case in which the auxiliary cavity is provided inside an accommodating cavity formed by a housing of the speaker module, in embodiments of this application, when the auxiliary cavity is located on a middle plate (for example, content corresponding to FIG. 6 in DESCRIPTION OF EMBODIMENTS), or when the auxiliary cavity is located in the rear cavity of the speaker, and the overall cavity is used as the rear cavity of the speaker (for example, content corresponding to FIG. 13 in DESCRIPTION OF EMBODIMENTS), because space of the auxiliary cavity is no longer limited by a volume of the accommodating cavity formed by the housing of the speaker module, a volume of the auxiliary cavity may further be increased. In this way, a desirable effect of suppressing a high-frequency resonance peak is achieved.

When an auxiliary hole is provided on the side wall of the front cavity of the speaker module, and the auxiliary cavity is located on a side of the front cavity, a damping structure cannot be disposed on the auxiliary hole. This is because if a damping structure, such as a mesh fabric, is adhered to a periphery of the auxiliary hole, to ensure an adhering effect of the mesh fabric, a large adhering area needs to be provided between the mesh fabric and the side wall of the front cavity. In addition, to ensure a damping effect of the damping structure, all edges need to be adhered to. In this way, a height (a size in the Z-axis direction in embodiments) of the side wall of the front cavity is required to be large. However, when the height of the side wall of the front cavity is large, it is not conducive to a lightening and thinning design of the electronic device, and a volume of the front cavity correspondingly increases, causing a high-frequency resonance peak of the speaker to move forward (move in a low frequency direction), affecting the performance of the speaker. Therefore, when the auxiliary hole is provided on the side wall of the front cavity of the speaker module, and the auxiliary cavity is located on a side of the front cavity, a damping structure cannot be disposed on the auxiliary hole. If the damping structure is disposed, the performance of the speaker is affected, which is contrary to the lightening and thinning design of the electronic device.

In some possible implementations, the overall housing includes a middle frame and a display screen, the middle frame includes an exterior part and a middle plate, the middle plate is located inside the exterior part, and the sound outlet hole is provided on the exterior part; and the middle plate includes a first surface and a second surface that face away from each other, the second surface is located on a side of the first surface facing away from the speaker, the display screen is located on a side of the second surface facing away from the first surface, the second surface of the middle plate is partially recessed to form a first groove, the first groove and the display screen define the auxiliary cavity, and the auxiliary hole is provided on the middle plate.

In other words, forming an auxiliary cavity by using an original structure of the electronic device can not only suppress the high-frequency resonance peak, but also does not need to be configured with a separate structure, so that the structure is simple.

In some possible implementations, a gap between the speaker kernel and the first surface is the front cavity, and at least a part of the overall cavity other than the front cavity is the rear cavity.

In such a configuration, a structure of the speaker can be simplified, and a volume of the rear cavity can be increased, to achieve a more desirable audio effect, for example, achieve stereophonic sound.

In some possible implementations, the speaker further includes a front shell, the front shell and the speaker kernel define the front cavity; and a communication hole is provided on the front shell, to cause the front cavity to be in communication with the auxiliary hole through the communication hole. In other words, a type of the speaker can be flexibly selected.

For example, the speaker module further includes a rear shell. The front shell and the rear shell define an accommodating cavity, and the speaker kernel is located inside the accommodating cavity. In this way, the rear cavity of the speaker module is a sealed rear cavity. Certainly, this does not constitute a limitation to this application. The speaker module may alternatively not include the rear shell. In this way, the rear cavity of the speaker may be an open rear cavity, that is, the overall cavity may be used as the rear cavity of the speaker, to achieve a more desirable audio effect, for example, achieve the stereophonic sound.

In some possible implementations, based on that the speaker described above further includes a front shell, and the front shell and the speaker kernel define the front cavity, the electronic device further includes an annular sealing member located between the front shell and the first surface and arranged around a periphery of the communication hole.

The annular sealing member is disposed to prevent sound leakage at a gap between the front shell and the first surface.

According to a second aspect, embodiments of this application provide a speaker module, and the speaker module includes a speaker housing and a speaker kernel, where the speaker module has an accommodating cavity, the speaker kernel divides the accommodating cavity into a front cavity and a rear cavity, the speaker housing includes a front shell, and the front shell and the speaker kernel define the front cavity; the speaker module further includes an auxiliary cavity, and at least a part of the auxiliary cavity is located on a side of the front cavity facing away from the speaker kernel; the auxiliary cavity includes a transmission channel and a silencing cavity in communication with the transmission channel, the transmission channel is in communication with the front cavity through an auxiliary hole, and the auxiliary hole is covered with a damping structure; the front shell includes a front wall and a side wall arranged around an edge of the front wall, the front wall includes a third surface and a fourth surface that face away from each other, and the fourth surface is located on a side of the third surface facing away from the speaker kernel, and the third surface of the front wall is partially recessed to form the auxiliary hole, and the fourth surface of the front wall is partially recessed to form a second groove; the speaker module further includes a sealing plate, and the sealing plate covers the second groove to form the transmission channel; and the front cavity is in communication with the transmission channel through the auxiliary hole.

By providing at least a part of the auxiliary cavity on a side of the front cavity facing away from the speaker kernel, the auxiliary cavity is in communication with the front cavity through the auxiliary hole, and the auxiliary hole is covered with the damping structure. In such a configuration, compared with a case in which the auxiliary hole is provided on a side wall of the front cavity of the speaker module, and the auxiliary cavity is provided and located on a side of the front cavity, the electronic device provided in this application is conducive to dispose the damping structure (if the auxiliary cavity is provided on the side of the front cavity, the damping structure cannot be disposed), and because space of the auxiliary cavity is no longer limited by a side of the front cavity of the speaker, a volume of the auxiliary cavity may further be increased. In this way, a desirable effect of suppressing a high-frequency resonance peak is achieved. In addition, the transmission channel is formed by using the front shell, and the transmission channel does not need to be separately provided.

For example, the rear cavity of the speaker module may be a closed rear cavity, or at least a part of an overall cavity may be the rear cavity of the speaker module. When the at least a part of the overall cavity is the rear cavity of the speaker module, space for providing the auxiliary cavity may be expanded, so that the effect of suppressing resonance achieved by the auxiliary cavity can be desirable.

In some possible implementations, the fourth surface of the front wall is partially recessed to form a third groove, the third groove is arranged around the second groove, a recess depth of the third groove is less than a recess depth of the second groove, and the sealing plate is located inside the third groove. In such a configuration, it is conducive to a lightening and thinning design of the speaker module, and further conducive to a lightening and thinning design of the electronic device.

In some possible implementations, the speaker module is used in an electronic device, where the electronic device includes an overall housing, the overall housing defines an overall cavity, the speaker kernel and at least a part of the overall cavity define the rear cavity, and the silencing cavity is located inside the rear cavity. In this way, the space for providing the auxiliary cavity may be expanded, so that the effect of suppressing resonance achieved by the auxiliary cavity can be desirable.

In some possible implementations, the front shell includes a first part and a second part, and the first part and the speaker kernel define the front cavity; and the speaker module further includes a silencing hood, and the silencing hood and the second part define the silencing cavity. In other words, a partial structure of the front shell cooperates with the silencing hood to define a silencing cavity, and the silencing cavity has a simple structure and simple forming process steps.

In some possible implementations, the damping structure includes a mesh fabric or the like, where the mesh fabric includes, for example. A type of the damping structure and a type of the mesh fabric when the damping structure is a mesh fabric are not limited in embodiments of this application.

According to a third aspect, embodiments of this application further provide an electronic device, where the electronic device is the electronic device according to the first aspect; and in addition, the electronic device further includes the speaker module according to the second aspect.

Any one of the third aspect and the implementations of the third aspect corresponds to any one of the first aspect and the implementations of the first aspect, or corresponds to any one of the second aspect and the implementations of the second aspect. For technical effects corresponding to any one of the third aspect and the implementations of the third aspect, refer to technical effects corresponding to any one of the first aspect and the implementations of the first aspect and technical effects corresponding to any one of the second aspect and the implementations of the second aspect. Details are not described herein again.

**BRIEF DESCRIPTION OF DRAWINGS**

FIG. 1 is a schematic structural diagram of an electronic device according to an embodiment of this application;
FIG. 2 is an exploded view of the electronic device shown in FIG. 1;
FIG. 3 is a simplified structural diagram of a speaker;
FIG. 4 is a comparison diagram of a relationship between frequency and loudness after separately performing simulation on a speaker not configured with an auxiliary cavity and a speaker configured with an auxiliary cavity;
FIG. 5 is a schematic structural diagram of a back side of an electronic device according to an embodiment of this application;

FIG. 6 is a schematic structural diagram of a middle frame according to an embodiment of this application;
FIG. 7 is a sectional view of the electronic device shown in FIG. 5 in an AA' direction;
FIG. 8 is an enlarged view of the middle frame BB area shown in FIG. 6;
FIG. 9 is a sectional view of a middle plate shown in FIG. 8 in a CC' direction;
FIG. 10 is a sectional view of the electronic device shown in FIG. 5 in a DD' direction;
FIG. 11 is still another sectional view of the electronic device shown in FIG. 5 in a DD' direction;
FIG. 12 is a schematic structural diagram of a front side of a speaker according to an embodiment of this application;
FIG. 13 is a schematic structural diagram of a back side of a speaker according to an embodiment of this application;
FIG. 14 is a sectional view of the electronic device shown in FIG. 1 in an EE' direction;
FIG. 15 is a schematic structural diagram of a front side of a front shell not configured with a sealing plate according to an embodiment of this application;
FIG. 16 is a schematic structural diagram of a back side of a front shell configured with a damping structure according to an embodiment of this application;
FIG. 17 is a schematic structural diagram of a back side of a front shell not configured with a damping structure according to an embodiment of this application;
FIG. 18 is a sectional view of the speaker shown in FIG. 13 in an FF' direction; and
FIG. 19 is a comparison diagram of a relationship between frequency and loudness after separately performing simulation on a speaker in which an auxiliary cavity is provided on a side of a front cavity and the speaker in which at least a part of the auxiliary cavity is provided on an upper side of the front cavity.

**DESCRIPTION OF EMBODIMENTS**

The following clearly and completely describes technical solutions in embodiments of this application with reference to accompanying drawings in embodiments of this application. It is clear that the described embodiments are some but not all embodiments of this application. All other embodiments obtained by a person of ordinary skill in the art based on embodiments of the present application without making creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms such as "first" and "second" are intended to distinguish between different objects, but do not indicate a particular order of the objects. For example, a first target object and a second target object are intended to distinguish between different target objects, but do not indicate a particular order of the target objects.

In embodiments of this application, the term such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, the term such as "example" or "for example" is intended to present a concept in a specific manner.

In the descriptions of embodiments of this application, unless otherwise stated, "a plurality of" means two or more. For example, "a plurality of processing units" means two or more processing units, and "a plurality of systems" means two or more systems.

To better understand embodiments of this application, a type of a speaker and a corresponding structure mentioned in embodiments of this application are first briefly described.

There are usually two types of speakers, one is a speaker module, and the other is a speaker monomer.

The speaker module usually includes a speaker housing and a speaker kernel. The speaker housing separately defines an accommodating cavity, or the speaker housing cooperates with another component of an electronic device to define an accommodating cavity. The speaker kernel is located inside the accommodating cavity and divides the accommodating cavity into a front cavity and a rear cavity. For example, the speaker housing includes a front shell and a rear shell. The front shell is assembled to the rear shell to form the accommodating cavity. The speaker kernel divides the accommodating cavity defined by the speaker housing into the front cavity and the rear cavity. For another example, the speaker housing is a front shell, the front shell and the speaker kernel define the front cavity, and an overall cavity of an entire electronic device is used as the rear cavity of the speaker module. In this way, a more desirable audio effect is achieved under limited architectural space of the electronic device, for example, stereophonic sound is achieved.

The speaker monomer has no independent housing and includes only a speaker kernel. When the speaker monomer is disposed inside an overall cavity of an electronic device, a front cavity is formed in a gap between the speaker monomer and a middle frame and the like of the electronic device, and a rear cavity is formed in a region of the overall cavity of the electronic device other than the front cavity.

Embodiments of this application provide an electronic device. The electronic device provided in embodiments of this application may be an electronic device including a speaker, such as a mobile phone, a tablet computer, a notebook computer, a personal digital assistant (personal digital assistant, PDA), an in-vehicle computer, a television, an intelligent wearable device (such as a smartwatch, a smart band, an intelligent head-mounted display, or intelligent glasses), or an intelligent household device. A specific form of the foregoing electronic device is not specifically limited in embodiments of this application. For ease of description, an example in which the electronic device is a mobile phone is used for description in the following.

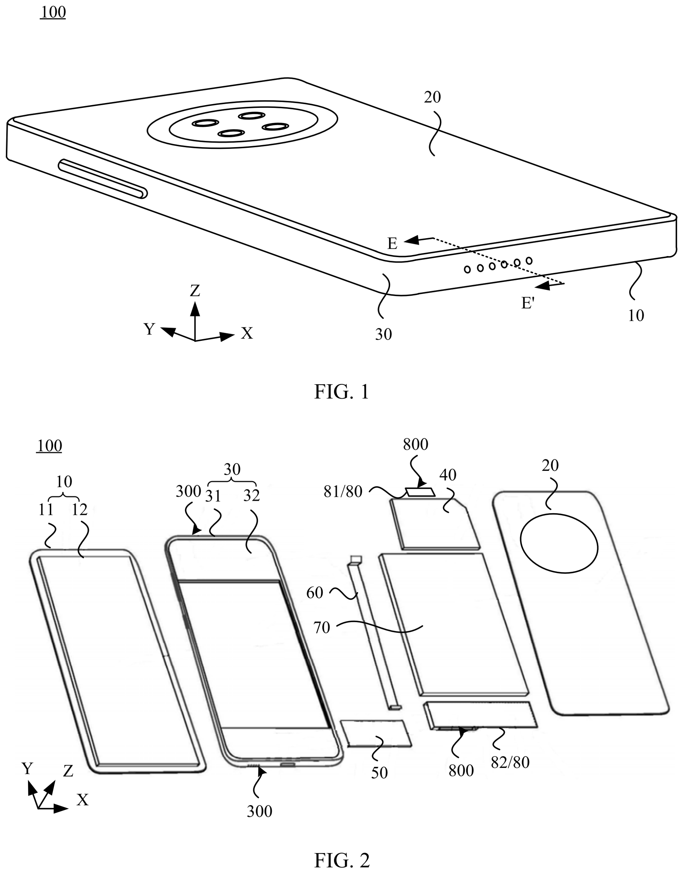

Refer to FIG. 1 and FIG. 2. FIG. 1 is a schematic structural diagram of a back side of an electronic device according to an embodiment of this application. FIG. 2 is an exploded view of the electronic device shown in FIG. 1. As shown in FIG. 1 and FIG. 2, a mobile phone 100 includes structures such as a display module 10, a rear cover (also referred to as a battery cover) 20, a middle frame 30, a main board 40, a secondary board 50, a flexible printed circuit (Flexible Printed Circuit, FPC) 60 connecting the main board 40 and the secondary board 50, a battery 70, and at least one speaker 80.

It may be understood that, FIG. 1, FIG. 2, and the following related accompanying drawings only schematically show some components included in the mobile phone 100, and actual shapes, actual sizes, actual positions, and actual structures of the components are not limited in FIG. 1, FIG. 2, and the following accompanying drawings. In addition, when the electronic device is a device in some other forms, the electronic device 100 may not include at least one of the display module 10, the rear cover 20, the secondary board 50, the FPC 60, the battery 70, and the like.

In FIG. 1 and FIG. 2, the mobile phone 100 is in a shape of a rectangular flat plate. To facilitate clear description of subsequent structural features and positional relationships between the structural features, an X-axis direction, a Y-axis direction, and a Z-axis direction are used to specify positional relationships between structures within the mobile phone. The X-axis direction is a width direction of the mobile phone, the Y-axis direction is a length direction of the mobile phone, and the Z-axis direction is a thickness direction of the mobile phone. It may be understood that, a coordinate system (that is, an X-axis, a Y-axis, and a Z-axis) of the electronic device may be flexibly set based on an actual requirement. This is not specifically limited herein. In other optional embodiments, the electronic device may alternatively be in a shape of a square flat plate, a circular flat plate, an elliptical flat plate, or the like. Certainly, the electronic device may alternatively be a foldable electronic device, or the like.

Still refer to FIG. 1 and FIG. 2. The display panel 10 includes a cover plate 11 and a display screen 12 that are stacked in the Z-axis direction. The cover plate 11, for example, protects the display screen 12. The display screen 12 includes, for example, a liquid crystal display (Liquid Crystal Display, LCD), an organic light emitting diode (Organic Light Emitting Diode, OLED) display screen, and an LED display screen. The LED display screen includes, for example, a micro-LED display screen and a mini-LED display screen. A type of the display screen 12 is not limited in embodiments of this application.

In the Z-axis direction, the rear cover 20 is located on a side of the display screen 12 facing away from the cover plate 11. A material of the rear cover 20 may include, for example, an opaque material such as plastic, plain leather, or glass fiber; and may further include a transparent material such as glass. The material of the rear cover 20 is not limited in embodiments of this application.

The middle frame 30 is located between the cover plate 11 and the rear cover 20. The middle frame 30 includes an annular exterior part 31 exposed on an outer side and a middle plate 32 that is located inside the annular exterior part 31 and that is located between the display screen 12 and the rear cover 20. The cover plate 11, the annular exterior part 31, and the rear cover 20 may define an overall cavity.

It should be noted that when the electronic device is a mobile phone 100, the cover plate 11, the annular exterior part 31, and the rear cover 20 that are exposed on an outer side form an overall housing of the electronic device, and the overall housing has an overall cavity. When the electronic device is a device in some other forms, a structure of the device exposed on an outer side is an overall housing, and the overall housing has an overall cavity.

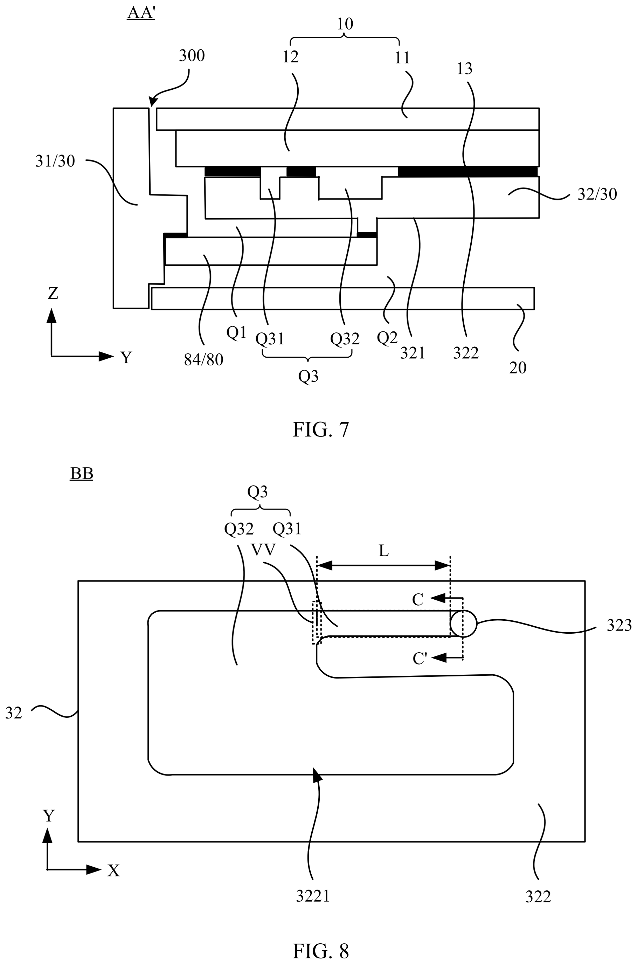

Structures such as the display screen 12, the main board 40, the secondary board 50, the FPC 60, the battery 70, and the speaker 80 are located inside the overall cavity. Some structures inside the overall cavity are supported through the middle plate 32. For example, the display module 10 is disposed on the middle plate 32 by using, for example, a back adhesive, and the display screen 12 and the like are supported through the middle plate 32. A relationship between film layers of the mobile phone 100 is described as follows (as shown in FIG. 7), and details are not described herein again.

In the Y-axis direction, the main board 40 and the secondary board 50 are disposed on two sides of the battery 70 respectively, and the FPC 60 passes through the battery 70 to electrically connect the main board 40 to the secondary board 50, to implement data and signal transmission between the main board 40 and the secondary board 50.

A control chip is integrated on the main board 40. For example, the control chip includes structures such as a system on chip (System on Chip, SoC) and an application processor (Application Processor, AP). The SoC is integrated with, for example, a central processing unit (Central Processing Unit, CPU), a graphics processing unit (Graphic Processing Unit, GPU), and a modem (Modem).

An antenna radio frequency front end, a universal serial bus (Universal Serial Bus, USB) device, and the like are integrated on the secondary board 50.

The battery 70 is configured to supply power to, for example, the display screen 12, a device on the main board 40, a device on the secondary board 50, and the speaker 80 in the mobile phone 100, so as to ensure normal operation of the mobile phone 100.

The speaker 80 is configured to convert an audio signal such as music and speech into sound, and can support a function of external audio playback. The at least one speaker 80 includes, for example, at least one first speaker 81; or the at least one speaker 80 includes, for example, at least one second speaker 82; or the at least one speaker 80 includes, for example, at least one first speaker 81 and at least one second speaker 82. The first speaker 81 is, for example, a speaker disposed adjacent to the main board 40. For example, the first speaker 81 is a speaker monomer or a speaker module. The second speaker 82 is, for example, a speaker disposed adjacent to the secondary board 50. For example, the second speaker 82 is a speaker monomer or a speaker module. In this embodiment of this application, descriptions are provided by using an example in which the at least one speaker 80 includes at least one first speaker 81 and at least one second speaker 82.

The first speaker 81 is a speaker disposed adjacent to the main board 40. In other words, in the Y-axis direction, the first speaker 81 is located on a side of the battery 70 facing away from the secondary board 50, and is electrically connected to the main board 40. The second speaker 82 is a speaker disposed adjacent to the secondary board 50. In other words, the second speaker 82 is located on a side of the battery 70 facing away from the main board 40, and is electrically connected to the secondary board 50. Actual positions at which the first speaker 81 and the second speaker 82 are disposed are similar to those in conventional technologies. For details, refer to the conventional technologies, and details are not described in embodiments of this application again. The main board 40 transmits an audio signal to the first speaker 81 electrically connected to the main board 40, and transmits the audio signal to the second speaker 82 via the FPC 60 and the secondary board 50. The main board 40 converts, through the first speaker 81 and the second speaker 82, the audio signal into sound for output. Specifically, the speaker 80 has a sound outlet channel 800, that is, the first speaker 81 and the second speaker 82 each have a sound outlet channel 800. Correspondingly, a sound outlet hole 300 in communication with the sound outlet channel 800 of the first speaker 81 and a sound outlet hole 300 in communication with the sound outlet channel 800 of the second speaker 82 are provided on the exterior part 31 of the middle frame 30. The sound at the first speaker 81 and the sound at the second speaker 82 is directed from the mobile phone 100 through the sound outlet hole 300 in communication with the sound outlet channel 800 of the first speaker 81 and the sound outlet hole 300 in communication with the sound outlet channel 800 of the second speaker 82, to be answered by a user.

It can be learned from BACKGROUND that, when the electronic device produces sound through the speaker, sometimes harsh sound is produced, affecting user experience. It is found through research that this is because front cavity resonance occurs on the speaker when the sound is emitted from the sound outlet channel 800 to the sound outlet hole 300, the speaker 80 forms high-frequency resonance peaks in some specific frequency bands (regions to which human ears are sensitive).

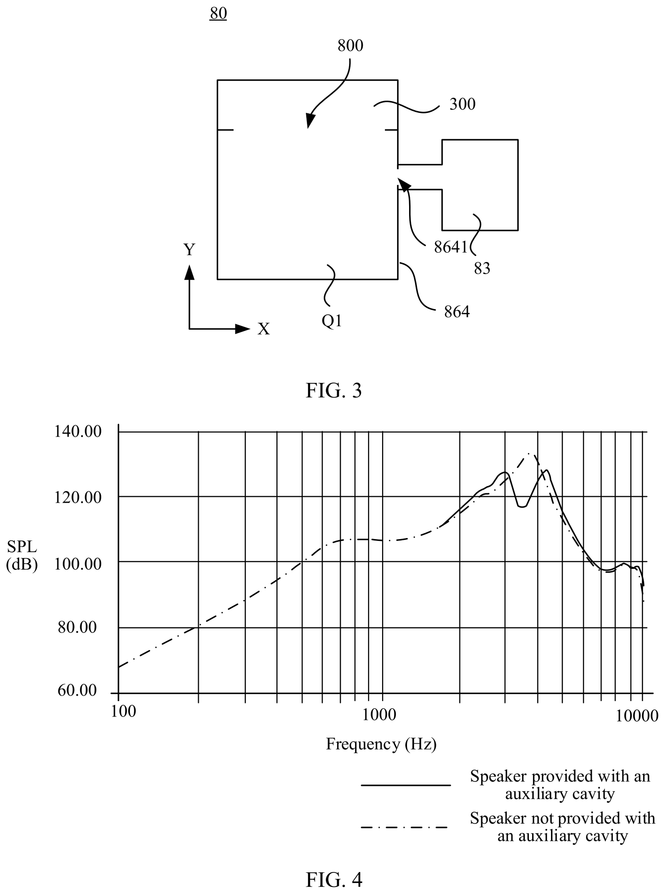

To suppress the high-frequency resonance peaks and improve a sound outlet effect of the speaker, referring to FIG. 3, FIG. 3 is a simplified structural diagram of a speaker. As shown in FIG. 3, the speaker 80 further includes an auxiliary cavity 83. In the X-axis direction, the auxiliary cavity 83 is located on a side of a front cavity Q1 (defined by a front wall, a side wall, and a speaker kernel). A side wall hole 8641 is provided on a side wall 864 of the front cavity of the speaker 80. The auxiliary cavity 83 is in communication with the front cavity Q1 through the auxiliary hole 8641. Energy of a high-frequency resonance peak of the front cavity Q1 is dispersed through the auxiliary cavity 83, so as to achieve an effect of suppressing the high-frequency resonance peak. However, it is found through research on the structure that, referring to FIG. 4, FIG. 4 is a comparison diagram of a relationship between frequency and loudness after separately performing simulation on a speaker not configured with an auxiliary cavity and a speaker configured with an auxiliary cavity (where the auxiliary cavity is located on a side of a front cavity). In FIG. 4, a horizontal coordinate is frequency (Frequency) in a unit of hertz (Hz), and a vertical coordinate is loudness (SPL) in a unit of dB. As shown in FIG. 4, when the speaker uses the auxiliary cavity 83 shown in FIG. 3, two small resonance peaks appear after a single high-frequency resonance peak is suppressed. In addition, because the auxiliary cavity 83 is located on a side of the front cavity Q1, and space for providing the auxiliary cavity 83 is limited, a cavity volume of the auxiliary cavity 83 is small, and loudness of the two small resonance peaks is still large. In other words, when the speaker uses the auxiliary cavity 83 shown in FIG. 3, an effect of suppressing the high-frequency resonance peak by the speaker is poor, and consequently, a user can still hear harsh sound when using the electronic device including the speaker, affecting user experience.

In view of this, embodiments of this application provide a speaker. By providing at least a part of the auxiliary cavity on a side of the front cavity facing away from the speaker kernel, the auxiliary cavity is in communication with the front cavity through the auxiliary hole, and the auxiliary hole is covered with the damping structure. Compared with a case in which the auxiliary hole is provided on a side wall of the front cavity of the speaker, and the auxiliary cavity is located on a side of the front cavity, the damping structure may be disposed on the auxiliary hole (if the auxiliary cavity is provided on the side of the front cavity, the damping structure cannot be configured), to enhance damping, so as to improve performance of the speaker. In addition, compared with a case in which the auxiliary cavity is provided inside an accommodating cavity formed by a housing of the speaker module, in this embodiment of this application, when the auxiliary cavity is located on a middle plate (for example, content corresponding to FIG. 6 in DESCRIPTION OF EMBODIMENTS), or when the auxiliary cavity is located in the rear cavity of the speaker, and the overall cavity is used as the rear cavity of the speaker (for example, content corresponding to FIG. 13 in DESCRIPTION OF EMBODIMENTS), because space of the auxiliary cavity is no longer limited by a volume of the accommodating cavity formed by the housing of the speaker module, and a volume of the auxiliary cavity may further be increased. In this way, a desirable effect of suppressing a high-frequency resonance peak is achieved.

When an auxiliary hole is provided on the side wall of the front cavity of the speaker module, and the auxiliary cavity is located on a side of the front cavity, a damping structure cannot be disposed on the auxiliary hole. This is because if a damping structure, such as a mesh fabric, is adhered to a periphery of the auxiliary hole, to ensure an adhering effect of the mesh fabric, a large adhering area needs to be provided between the mesh fabric and the side wall of the front cavity. In addition, to ensure a damping effect of the damping structure, all edges need to be adhered to. In this case, a height (a size in the Z-axis direction in embodiments) of the side wall of the front cavity is required to be large. However, when the height of the side wall of the front cavity is large, it is not conducive to a lightening and thinning design of the electronic device, and a volume of the front cavity correspondingly increases, causing a high-frequency resonance peak of the speaker to move forward (move in a low frequency direction), affecting the performance of the speaker. Therefore, when an auxiliary hole is provided on a side wall of the front cavity of the speaker module, and the auxiliary cavity is located on a side of the front cavity, a damping structure cannot be disposed on the auxiliary hole, which affects performance of the speaker, and is contrary to the lightening and thinning design of the electronic device.

A structure of the speaker is specifically described as follows with reference to the electronic device. Descriptions are provided below by using an example in which the mobile phone 100 is configured with two speakers, and the two speakers include, for example, one first speaker 81 and one second speaker 82. In addition, unless specifically described, descriptions are provided below by using an example in which the first speaker 81 is a speaker monomer, and the second speaker 82 is a speaker module. The following example does not constitute a limitation to this application.

Refer to FIG. 5 to FIG. 7. FIG. 5 is a schematic structural diagram of a back side of an electronic device according to an embodiment of this application. FIG. 6 is a schematic structural diagram of a middle frame according to an embodiment of this application. FIG. 7 is a sectional view of the electronic device shown in FIG. 5 in an AA' direction. As shown in FIG. 5 to FIG. 7, the first speaker 81 is a speaker monomer, and includes a speaker kernel 84. In the Z-axis direction, the middle plate 32 includes a first surface 321 and a second surface 322 that face away from each other. The second surface 322 is located on a side of the first surface 321 facing away from the speaker kernel 84. The display screen 12 is located on a side of the second surface 322 facing away from the first surface 321. The display screen 12 is fastened to the second surface 322 of the middle plate 32, for example, by using a back adhesive 13. The display screen 12 is supported by the middle plate 32. A gap between the speaker kernel 84 and the first surface 321 of the middle plate 32 is the front cavity Q1 of the first speaker 81, and at least a part of the overall cavity other than the front cavity Q1 is a rear cavity Q2. In this way, the structure of the speaker can be simplified, and a volume of the rear cavity can be increased, to achieve a more desirable audio effect, for example, achieve stereophonic sound.

It should be noted that FIG. 7 merely shows a position of the speaker kernel 84 and the front cavity Q1 of the first speaker 81 defined by the middle plate 32 and the speaker kernel 84. During actual disposition, a specific position of the speaker kernel 84 and a specific structure of the front cavity Q1 of the first speaker 81 defined by the middle plate 32 and the speaker kernel 84 are similar to those in the conventional technologies. For details, refer to the conventional technologies, and details are not described herein again.

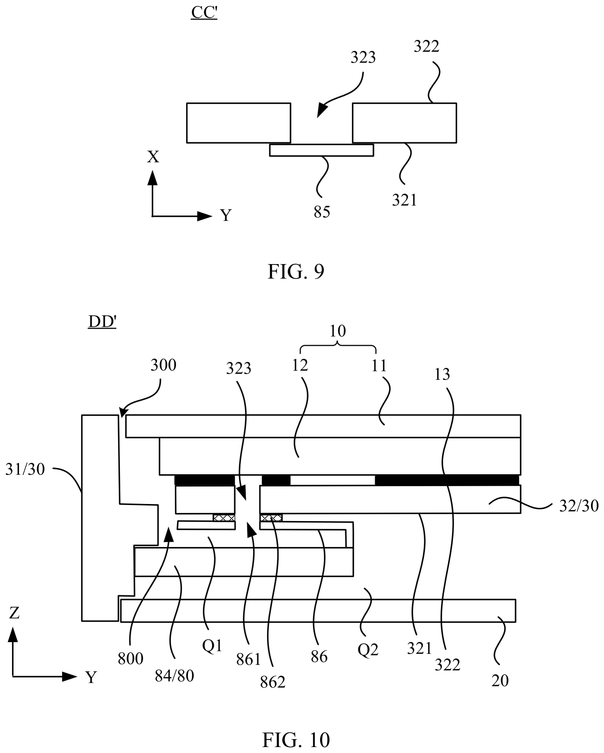

Refer to FIG. 8 and FIG. 9. FIG. 8 is an enlarged view of a middle frame BB area shown in FIG. 6. FIG. 9 is a sectional view of a middle plate shown in FIG. 8 in a CC' direction. As shown in FIG. 7 to FIG. 9, the second surface 322 of the middle plate 32 is partially recessed to form a first groove 3221, and the first groove 3221, the display screen 12, and the back adhesive 13 define an auxiliary cavity Q3. The auxiliary cavity Q3 includes a transmission channel Q31 and a silencing cavity Q32 in communication with the transmission channel Q31. A length of the transmission channel Q31 is L, a cross-sectional area of the transmission channel Q31 is S1, a cross-sectional area at a position at which the silencing cavity Q32 is connected to the transmission channel Q31 (that is, at a VV region) is S2, and S2 is greater than S1. The length of the transmission channel Q31 is a size of the transmission channel Q31 in the X-axis direction in FIG. 8. The cross-sectional area of the transmission channel Q31 is an area of a projection of the transmission channel Q31 on a plane formed by a Y-axis and a Z-axis. The cross-sectional area at the position at which the silencing cavity Q32 is connected to the transmission channel Q31 is an area of a projection, on the plane formed by the Y-axis and the Z-axis, of the position at which the silencing cavity Q32 is connected to the transmission channel Q31.

An auxiliary hole 323 is provided on the middle plate 32, and the transmission channel Q31 is in communication with the front cavity Q1 through the auxiliary hole 323. The auxiliary hole 323 is covered with a damping structure 85, and the damping structure 85 is, for example, in contact with the first surface 321. The damping structure 85 includes, for example, a mesh fabric. The mesh fabric includes, for example, a breathable mesh fabric or a dustproof mesh. A type of the damping structure 85 and a type of the mesh fabric when the damping structure 85 is a mesh fabric are not limited in embodiments of this application.

Specifically, some sound waves directed from an outer side of the mobile phone 100 through the sound outlet hole 300 enter the auxiliary cavity Q3. When a sound wave of preset frequency enters the auxiliary cavity Q3, because the cross-sectional area of the transmission channel Q31 is small, the sound wave cannot be transmitted through the transmission channel Q31. Therefore, the sound wave is reflected back and forth in the auxiliary cavity Q3 until the sound wave is almost consumed, thereby suppressing a resonance peak generated during operation of the speaker. The preset frequency and the auxiliary cavity Q3 satisfy the following formula:

$$f = \frac{C_0}{2\pi}\sqrt{\frac{S1}{LV}}$$

f represents the preset frequency, $C_0$ represents a sound velocity, and V represents a volume of the silencing cavity Q32. Frequency (that is, preset frequency) at which a sound wave needs to be eliminated is adjusted by adjusting at least one of the length of the transmission channel Q31, the cross-sectional area of the transmission channel Q31, and the volume of the silencing cavity Q32. In other words, a corresponding loudness value at this frequency is small. In this example, the auxiliary hole 323 is provided on the middle plate 32, and is located right above the front cavity Q1 (that is, a side of the front cavity facing away from the speaker kernel) in the Z-axis direction. In this way, compared with a case in which the auxiliary cavity Q3 is provided on a side of the front cavity Q1, that is, the auxiliary cavity Q3 is located on a side of the front cavity Q1 in the X-axis direction or the Y-axis direction, the auxiliary hole 323 may be covered with the damping structure 85. When the auxiliary hole 323 is covered with the damping structure 85, damping may be enhanced. In addition, because the auxiliary cavity Q3 is located on the middle plate 32, space of the auxiliary cavity Q3 is no longer limited by the volume of the accommodating cavity formed by the housing of the speaker module, the volume of the auxiliary cavity Q3 may further be increased. When the volume of the auxiliary cavity Q3 is increased, more sound waves are consumed, and an effect of suppressing the resonance peak is more desirable, thereby further improving a sound production effect, and improving user experience. In addition, because the auxiliary cavity Q3 is formed by using an original structure of the electronic device, and there is no need to configure a separate structure, the structure is simple.

It should be noted that, the foregoing descriptions are provided by using an example in which the first speaker 81 is a speaker monomer. This does not constitute a limitation to this application. In another optional embodiment of this application, a first speaker 81 may alternatively be a speaker module. When the first speaker 81 is a speaker module, in a possible implementation, referring to FIG. 10, FIG. 10 is a sectional view of the electronic device shown in FIG. 5 in a DD' direction. As shown in FIG. 10, the speaker module further includes a front shell 86, and the front shell 86 and the speaker kernel 84 define a front cavity Q1. A communication hole 861 is provided on the front shell 86. The front cavity Q1 may be in communication with an auxiliary hole 323 through the communication hole 861. In this way, communication between the front cavity Q1 and the auxiliary cavity Q3 is implemented through the communication hole 861 and the auxiliary hole 323.

It should be noted that FIG. 10 merely shows a position and a structure of the speaker module. During actual disposition, when the speaker module further includes the front shell 86, a specific position and structure of the speaker module are similar to those in the conventional technologies. For details, refer to the conventional technologies, and details are not described herein again.

In other words, regardless of whether the first speaker 81 is a speaker monomer or a speaker module, the first groove 3221 formed on the middle plate, the display screen 12, and the back adhesive 13 can be used to define the auxiliary cavity Q3, so as to achieve an effect of suppressing a resonance peak. In this way, a person skilled in the art may select a type of the speaker more flexibly during electronic device manufacturing.

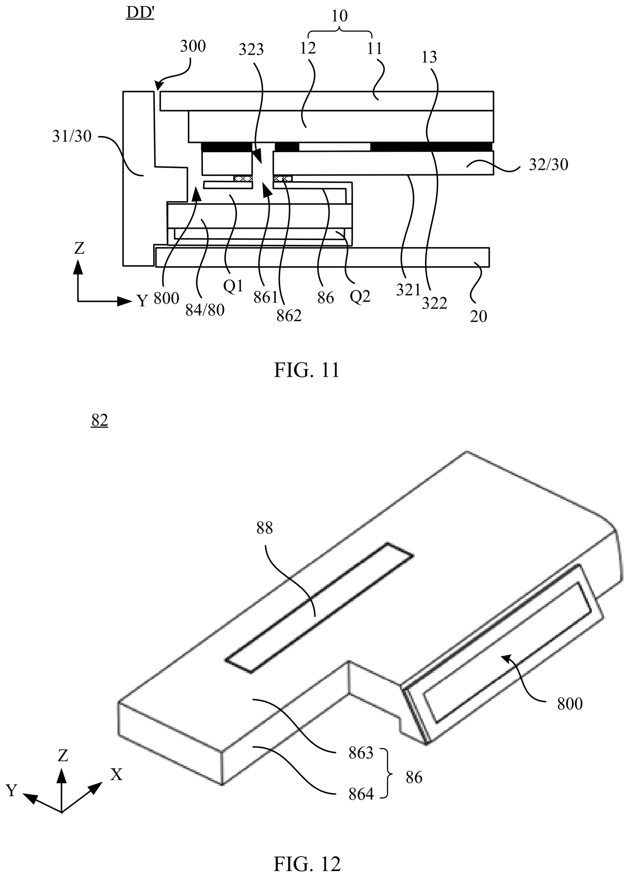

It should be noted that FIG. 10 is described by using an example in which when the speaker is a speaker module, the speaker module includes the front shell 86, the front shell 86 and the speaker kernel 84 define the front cavity Q1, and the overall cavity is used as the rear cavity Q2 of the speaker. In such a configuration, a more desirable audio effect can be achieved. However, this does not constitute a limitation to this application. In another embodiment of this application, referring to FIG. 11, FIG. 11 is still another sectional view of the electronic device shown in FIG. 5 in a DD' direction. As shown in FIG. 11, the speaker module may further include a rear shell 87. After being assembled together, the front shell 86 and the rear shell 87 define an accommodating cavity. The speaker kernel 84 is located inside the accommodating cavity, and divides the accommodating cavity into a front cavity Q1 and a rear cavity Q2. A structure and an assembly relationship of the front shell 86 and the rear shell 87 of the speaker are similar to those in the conventional technologies. For details, refer to the conventional technologies, and details are not described herein again.

In this case (a case in which the speaker module includes at least the front shell 86), it is considered that, before entering the auxiliary cavity Q3, some sound waves that need to be directed from an outer side of the mobile phone 100 through the sound outlet hole 300 may be leaked from a gap between the front shell 86 and the first surface 321 of the middle plate 32. Still refer to FIG. 11. The mobile phone 100 further includes an annular sealing member 862. The annular sealing member 862 is located between the front shell 86 and the first surface 321 of the middle plate 32, and is arranged around a periphery of the communication hole 861.

For a type of the annular sealing member 862, the type of the annular sealing member 862 is not limited in embodiments of this application, provided that sound can be prevented from leaking from the gap between the front shell 86 and the first surface 321 of the middle plate 32. For example, the annular sealing member 862 includes, for example, a back adhesive.

In conclusion, because the middle plate 32 is disposed at a position at which the main board 40 of the mobile phone 100 is disposed, in this embodiment of this application, the first speaker 81 disposed adjacent to the main board 40 forms the auxiliary cavity Q3 by using the middle plate 32. In this way, a resonance peak can be suppressed, and a structure for suppressing the resonance peak does not need to be separately disposed, so that the structure is simple.

A specific structure and principle of the first speaker 81 disposed adjacent to the main board 40 to achieve an effect of suppressing a resonance peak are described above, and a specific structure and principle of the second speaker 82 disposed adjacent to the secondary board 50 to achieve an effect of suppressing the resonance peak are described below.

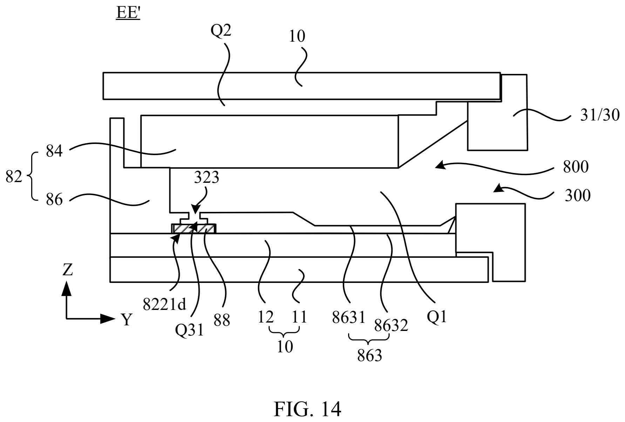

Refer to FIG. 12, FIG. 13, and FIG. 14. FIG. 12 is a schematic structural diagram of a front side of a speaker according to an embodiment of this application. FIG. 13 is a schematic structural diagram of a back side of a speaker according to an embodiment of this application. FIG. 14 is a sectional view of the electronic device shown in FIG. 1 in an EE' direction. Referring to FIG. 12 to FIG. 14, the second speaker 82 is a speaker module, and the speaker module includes the speaker kernel 84 and the front shell 86.

Optionally, the speaker module may further include a rear shell (not shown in the figure), that is, after being assembled together, the front shell 86 and the rear shell define an accommodating cavity. The speaker kernel 84 is located inside the accommodating cavity, and divides the accommodating cavity into a front cavity Q1 and a rear cavity Q2, that is, a gap between the front shell 86 and the speaker kernel 84 is the front cavity Q1, and a gap between the rear shell and the speaker kernel 84 is the rear cavity Q2. Structures and an assembly relationship of the front shell 86 and the rear shell of the speaker are similar to those in the conventional technologies. For details, refer to the conventional technologies, and details are not described herein again. Certainly, the speaker module may alternatively not include a rear shell. When the speaker module does not include the rear shell, a gap between a front shell 822 and a speaker kernel 821 is the front cavity Q1, and the overall cavity is used as the rear cavity Q2 of the speaker. In such a configuration, a more desirable audio effect can be achieved. This embodiment of this application is described by using an example in which the second speaker module 82 does not include a rear shell.

The front shell 86 includes a front wall 863 and a side wall 864 arranged around an edge of the front wall 863. In the Z-axis direction, the front wall 863 includes a third surface 8631 and a fourth surface 8632 that face away from each other, and the fourth surface 8632 is located on a side of the third surface 8631 facing away from the speaker kernel 84.

It should be noted that FIG. 14 merely shows a position and a structure of the speaker module. During actual disposition, a specific position and structure of the speaker module are similar to those in the conventional technologies. For details, refer to the conventional technologies, and details are not described herein again.

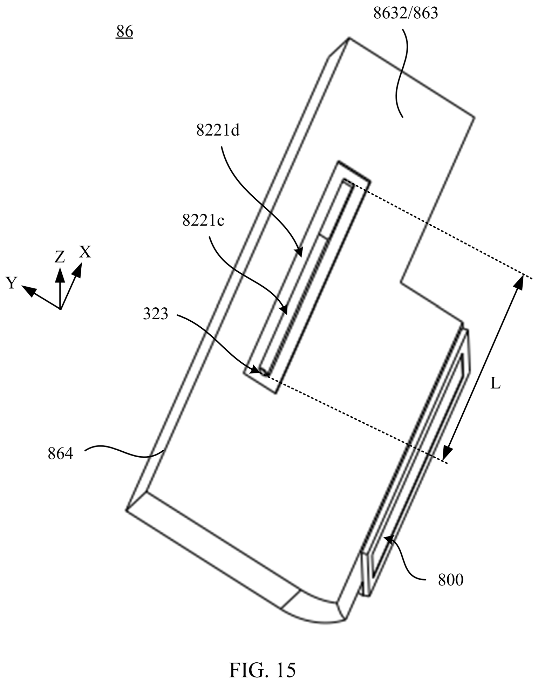

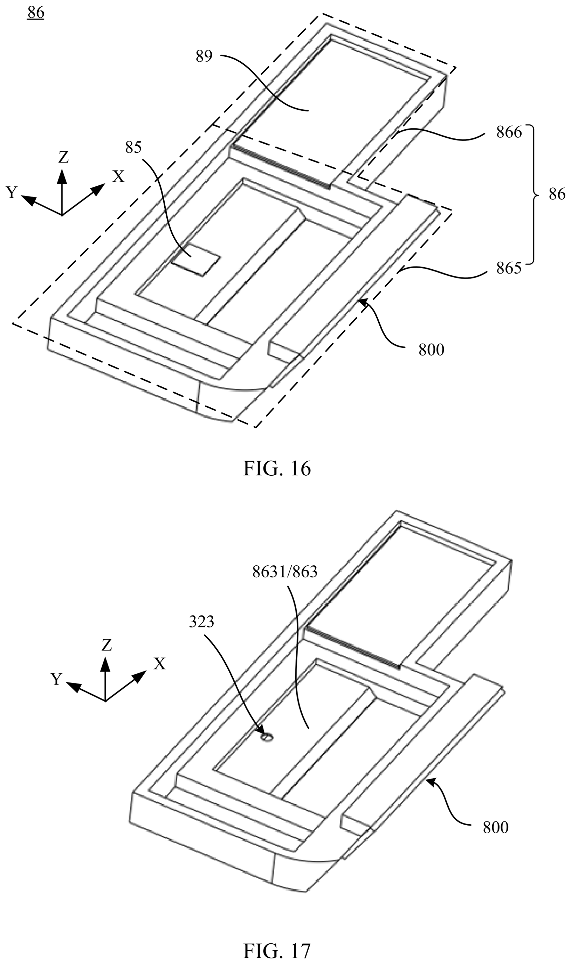

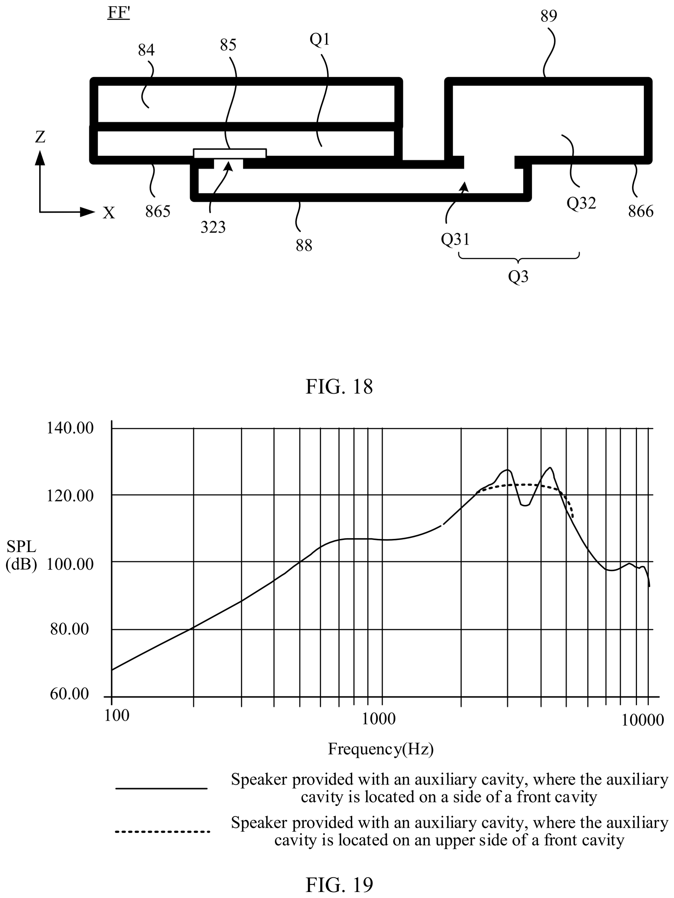

Refer to FIG. 15 to FIG. 18. FIG. 15 is a schematic structural diagram of a front side of a front shell not configured with a sealing plate according to an embodiment of this application. FIG. 16 is a schematic structural diagram of a back side of a front shell configured with a damping structure according to an embodiment of this application. FIG. 17 is a schematic structural diagram of a back side of a front shell not configured with a damping structure according to an embodiment of this application. FIG. 18 is a sectional view of the speaker shown in FIG. 13 in an FF' direction. To clearly show inventive points of this application, FIG. 18 merely shows some structures rather than all structures. As shown in FIG. 12 to FIG. 18, the speaker module further includes an auxiliary cavity Q3, the auxiliary cavity Q3 includes a transmission channel Q31 and a silencing cavity Q32 in communication with the transmission channel Q31, and the fourth surface 8632 of the front wall 863 is partially recessed to form a second groove 8221c. The speaker module further includes a sealing plate 88. The sealing plate 88 covers the second groove 8221c to form the transmission channel Q31, that is, the transmission channel Q31 is formed by using the front shell 86. The transmission channel Q31 does not need to be separately provided, and a part of the transmission channel Q31 is located on a side of the front cavity Q1 facing away from the speaker kernel 84. A length of the transmission channel Q31 is L, a cross-sectional area of the transmission channel Q31 is S1, a cross-sectional area at a position at which the silencing cavity Q32 is connected to the transmission channel Q31 is S2, and S2 is greater than S1. The length of the transmission channel Q31 is a size of the transmission channel Q31 in the X-axis direction in FIG. 8. The cross-sectional area of the transmission channel Q31 is an area of a projection of the transmission channel Q31 on a plane formed by a Y-axis and a Z-axis. The cross-sectional area at the position at which the silencing cavity Q32 is connected to the transmission channel Q31 is an area of a projection, on the plane formed by the Y-axis and the X-axis, of the position at which the silencing cavity Q32 is connected to the transmission channel Q31. The third surface 8631 of the front wall 863 is partially recessed to form an auxiliary hole 323. The front cavity Q1 is in communication with the transmission channel Q31 through the auxiliary hole 323. A damping structure 85 is disposed on the third surface 8631 of the front wall 863 and covers the auxiliary hole 323. The damping structure 85 may include, for example, a mesh fabric. The mesh fabric includes, for example, a breathable mesh fabric or a dustproof mesh. A type of the damping structure 85 and a type of the mesh fabric when the damping structure 85 is a mesh fabric are not limited in embodiments of this application.

A position at which the silencing cavity Q32 is provided is not limited in embodiments of this application, provided that the silencing cavity Q32 can be in communication with the transmission channel Q31.

In a possible implementation, as can be learned from the foregoing content, the overall cavity may be used as the rear cavity Q2 of the speaker. Therefore, the silencing cavity Q32 may be provided inside the rear cavity Q2. Because an area of the rear cavity Q2 is large, a volume of the silencing cavity Q32 may also be large. In this way, an effect of suppressing resonance achieved by the auxiliary cavity Q3 is more desirable. For reasons, refer to the foregoing content, and details are not described herein again.

In this case, to simplify process steps of forming the silencing cavity Q32, still referring to FIG. 13, FIG. 16, and FIG. 18, the front shell 86 includes a first part 865 and a second part 866. The first part 865 and the speaker kernel 84 define the front cavity Q1. The speaker module further includes a silencing hood 89, and the silencing hood 89 and the second part 866 define the silencing cavity Q32. In other words, a partial structure of the front shell 86 cooperates with the silencing hood 89 to form the silencing cavity Q32, so that the structure of the silencing cavity Q32 is simple, and forming process steps are simple.

To prevent the configuration of the sealing plate 88 from increasing a thickness of the speaker module, still referring to FIG. 12, FIG. 14, and FIG. 15, the fourth surface 8632 of the front wall 863 is partially recessed to form a third groove 8221d. The third groove 8221d is arranged around the second groove 8221c. In addition, in the Z-axis direction, a recess depth of the third groove 8221d is less than a recess depth of the second groove 8221c. The sealing plate 88 is located inside the third groove 8221d, that is, the sealing plate 88 is embedded in the front wall 863. In such a configuration, it is conducive to a lightening and thinning design of the speaker module, and further conducive to a lightening and thinning design of the electronic device.

In conclusion, the second speaker 82 disposed adjacent to the secondary board 50 forms the auxiliary hole 323 and the transmission channel Q31 by using the front shell of the second speaker 82. The front cavity Q1 is in communication with the transmission channel Q31 through the auxiliary hole 323, and the front cavity Q1 is in communication with the silencing cavity Q32 through the transmission channel Q31, thereby implementing communication between the front cavity Q1 and the silencing cavity Q32. In addition, the auxiliary hole 323 is covered with the damping structure 85. In this way, a resonance peak can be desirably suppressed, and the structure is simple.

It can be learned from the specific structure and principle of the first speaker and the second speaker to achieve the effect of suppressing the resonance peak, that the speaker provided in embodiments of this application has a desirable effect of suppressing a high-frequency resonance peak, to prevent the electronic device from producing harsh sound when using the speaker for sound production, thereby improving user experience.

To describe in detail that the speaker provided in this application has a desirable effect of suppressing a high-frequency resonance peak, the following describes the speaker by comparison with a speaker in which an auxiliary cavity Q3 is provided on a side (in the X-axis direction or the Y-axis direction) of a front cavity Q1.

FIG. 19 is a comparison diagram of a relationship between frequency and loudness after separately performing simulation on a speaker in which an auxiliary cavity is provided on a side of a front cavity and a speaker in which at least a part of the auxiliary cavity is provided on an upper side of the front cavity. Because a simulation result of the first speaker 81 is similar to a simulation result of the second speaker 82, FIG. 19 merely shows one of the simulation results (that is, the simulation result of the first speaker 81). In FIG. 19, a horizontal coordinate is frequency (Frequency) in a unit of hertz (Hz), and a vertical coordinate is loudness (SPL) in a unit of dB.

As shown in FIG. 19, it is found through the simulation result that, for the speaker (the speaker in which at least a part of the auxiliary cavity is disposed above the front cavity) provided in embodiments of this application, at positions where two small resonance peaks had appeared, the two small resonance peaks disappear, a loudness curve becomes smooth, and the loudness obviously decreases.

Therefore, it can be learned through simulation that, the speaker provided in embodiments of this application has a more desirable effect of suppressing the high-frequency resonance peak because the damping structure is configured and the volume of the silencing cavity can be increased, to prevent the electronic device from producing harsh sound when using the speaker for sound production, thereby improving user experience.

In conclusion, the foregoing embodiments are merely intended for describing the technical solutions in this application, but not for limiting this application. Although this application is described in detail with reference to the foregoing embodiments, it should be appreciated by a person of ordinary skill in the art that, modifications may still be made to the technical solutions described in the foregoing embodiments, or equivalent replacements may be made to some technical features, as long as such modifications or replacements do not cause the essence of corresponding technical solution to depart from the scope of the technical solutions in embodiments of this application.

## Claims

1. An electronic device, comprising an overall housing and at least one speaker, wherein the overall housing defines an overall cavity, and the speaker is located inside the overall cavity;

   a sound outlet hole is provided on the overall housing;
   the speaker comprises a speaker kernel, a front cavity, and a rear cavity, the front cavity has a sound outlet channel, and the sound outlet channel is in communication with the sound outlet hole; and
   the speaker further comprises an auxiliary cavity, and at least a part of the auxiliary cavity is located on a side of the front cavity facing away from the speaker kernel; and the auxiliary cavity comprises a transmission channel and a silencing cavity in communication with the transmission channel, the transmission channel is in communication with the front cavity through an auxiliary hole, and the auxiliary hole is covered with a damping structure.

2. The electronic device according to claim 1, wherein the overall housing comprises a middle frame and a display screen, the middle frame comprises an exterior part and a middle plate, the middle plate is located inside the exterior part, and the sound outlet hole is provided on the exterior part; and
   the middle plate comprises a first surface and a second surface that face away from each other, the second surface is located on a side of the first surface facing away from the speaker, the display screen is located on a side of the second surface facing away from the first surface, the second surface of the middle plate is partially recessed to form a first groove, the first groove and the display screen define the auxiliary cavity, and the auxiliary hole is provided on the middle plate.

3. The electronic device according to claim 2, wherein a gap between the speaker kernel and the first surface is the front cavity, and at least a part of the overall cavity other than the front cavity is the rear cavity.

4. The electronic device according to claim 2, wherein the speaker further comprises a front shell, the front shell and the speaker kernel define the front cavity; and
a communication hole is provided on the front shell, to cause the front cavity to be in communication with the auxiliary hole through the communication hole.

5. The electronic device according to claim 4, wherein the electronic device further comprises an annular sealing member located between the front shell and the first surface and arranged around a periphery of the communication hole.

6. A speaker module, comprising a speaker housing and a speaker kernel, wherein the speaker module has an accommodating cavity, the speaker kernel divides the accommodating cavity into a front cavity and a rear cavity, the speaker housing comprises a front shell, and the front shell and the speaker kernel define the front cavity;

the speaker module further comprises an auxiliary cavity, and at least a part of the auxiliary cavity is located on a side of the front cavity facing away from the speaker kernel; and the auxiliary cavity comprises a transmission channel and a silencing cavity in communication with the transmission channel, the transmission channel is in communication with the front cavity through an auxiliary hole, and the auxiliary hole is covered with a damping structure;
the front shell comprises a front wall and a side wall arranged around an edge of the front wall, the front wall comprises a third surface and a fourth surface that face away from each other, and the fourth surface is located on a side of the third surface facing away from the speaker kernel, the third surface of the front wall is partially recessed to form the auxiliary hole, and the fourth surface of the front wall is partially recessed to form a second groove; and
the speaker module further comprises a sealing plate, and the sealing plate covers the second groove to form the transmission channel; and the front cavity is in communication with the transmission channel through the auxiliary hole.

7. The speaker module according to claim 6, wherein the fourth surface of the front wall is partially recessed to form a third groove, the third groove is arranged around the second groove, a recess depth of the third groove is less than a recess depth of the second groove, and the sealing plate is located inside the third groove.

8. The speaker module according to claim 6 or 7, used in an electronic device, wherein the electronic device comprises an overall housing, the overall housing defines an overall cavity, the speaker kernel and at least a part of the overall cavity define the rear cavity, and the silencing cavity is located inside the rear cavity.

9. The speaker module according to any one of claims 6 to 8, wherein the front shell comprises a first part and a second part, and the first part and the speaker kernel define the front cavity; and
the speaker module further comprises a silencing hood, and the silencing hood and the second part define the silencing cavity.

10. The speaker module according to any one of claims 6 to 9, wherein the damping structure comprises a mesh fabric.

11. An electronic device, wherein the electronic device is the electronic device according to any one of claims 1 to 5; and
the electronic device further comprises the speaker module according to any one of claims 6 to 10.

FIG. 1

FIG. 2

FIG. 3

Speaker provided with an
auxiliary cavity

Speaker not provided with
an auxiliary cavity

FIG. 4

100

FIG. 5

FIG. 6

AA'

FIG. 7

BB

FIG. 8

CC'

323

322

X

Y

85

321

FIG. 9

DD'

10

300    323    12    11    13

31/30

32/30

Z

Y

800    Q1    861    86    Q2    321    20
84/80    862    322

FIG. 10

DD'

300  323  10  12  11  13

31/30  32/30

Z

Y  800  Q1  861  86  Q2  321  20
84/80  862  322

**FIG. 11**

82

88

Z
Y  X

863  86
864

800

**FIG. 12**

FIG. 13

EE'

FIG. 14

FIG. 15

86

89

85

Z
Y X

866
86
865

800

FIG. 16

8631/863

323

Z
Y X

800

FIG. 17

FIG. 18

Frequency(Hz)

—————————  Speaker provided with an auxiliary cavity, where the auxiliary
cavity is located on a side of a front cavity

------------  Speaker provided with an auxiliary cavity, where the auxiliary
cavity is located on an upper side of a front cavity

FIG. 19

## INTERNATIONAL SEARCH REPORT

| International application No. |
| --- |
| **PCT/CN2024/082255** |

### A.    CLASSIFICATION OF SUBJECT MATTER

H04R 9/06(2006.01)i

According to International Patent Classification (IPC) or to both national classification and IPC

### B.    FIELDS SEARCHED

Minimum documentation searched (classification system followed by classification symbols)

IPC：H04R，H04M

Documentation searched other than minimum documentation to the extent that such documents are included in the fields searched

Electronic data base consulted during the international search (name of data base and, where practicable, search terms used)

CNTXT, CNKI, ENTXT, DWPI: 扬声器, 喇叭, 模组, 孔, 阻尼, 网布, 辅助, 腔, 管道, 通道, 前, 后, 谐振, 高频, 凹槽, 凹陷, 密封, 板, speaker?, loudspeaker?, module?, group?, hole?, aperture?, damping, mesh, cloth+, auxiliary, cavit+, chamber?, channel?, pip+, tube?, front, rear, resonance, high, frequency?, groove?, concave?, seal+, plate?, board?

### C.    DOCUMENTS CONSIDERED TO BE RELEVANT

| Category* | Citation of document, with indication, where appropriate, of the relevant passages | Relevant to claim No. |
| --- | --- | --- |
| X | CN 110891208 A (AAC TECHNOLOGIES (SINGAPORE) CO., LTD.) 17 March 2020 (2020-03-17)<br>description, paragraphs [0006]-[0047], and figures 1-9 | 1-5 |
| A | CN 109218895 A (AAC TECHNOLOGIES (SINGAPORE) CO., LTD.) 15 January 2019 (2019-01-15)<br>entire document | 1-11 |
| A | CN 115633295 A (HONOR TERMINAL CO., LTD.) 20 January 2023 (2023-01-20)<br>entire document | 1-11 |
| A | CN 113037904 A (HUAWEI TECHNOLOGIES CO., LTD.) 25 June 2021 (2021-06-25)<br>entire document | 1-11 |
| A | CN 214177541 U (AAC TECHNOLOGIES (SINGAPORE) CO., LTD.) 10 September 2021 (2021-09-10)<br>entire document | 1-11 |
| A | CN 207475869 U (GOERTEK TECHNOLOGY CO., LTD.) 08 June 2018 (2018-06-08)<br>entire document | 1-11 |

☑ Further documents are listed in the continuation of Box C.     ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 May 2024** | **05 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/082255** |

| C. | DOCUMENTS CONSIDERED TO BE RELEVANT | |
|---|---|---|
| Category* | Citation of document, with indication, where appropriate, of the relevant passages | Relevant to claim No. |
| A | CN 213694142 U (GOERTEK INC.) 13 July 2021 (2021-07-13)<br>entire document | 1-11 |
| A | US 2018206011 A1 (GOERTEK INC.) 19 July 2018 (2018-07-19)<br>entire document | 1-11 |

Form PCT/ISA/210 (second sheet) (July 2022)

## INTERNATIONAL SEARCH REPORT
### Information on patent family members

International application No.

**PCT/CN2024/082255**

| Patent document cited in search report | | | Publication date (day/month/year) | Patent family member(s) | | | Publication date (day/month/year) |
|---|---|---|---|---|---|---|---|
| CN | 110891208 | A | 17 March 2020 | WO | 2021109200 | A1 | 10 June 2021 |
| CN | 109218895 | A | 15 January 2019 | US | 2020045399 | A1 | 06 February 2020 |
| | | | | US | 10764664 | B2 | 01 September 2020 |
| CN | 115633295 | A | 20 January 2023 | None | | | |
| CN | 113037904 | A | 25 June 2021 | None | | | |
| CN | 214177541 | U | 10 September 2021 | WO | 2021243976 | A1 | 09 December 2021 |
| | | | | US | 2021385562 | A1 | 09 December 2021 |
| | | | | US | 11265629 | B2 | 01 March 2022 |
| CN | 207475869 | U | 08 June 2018 | None | | | |
| CN | 213694142 | U | 13 July 2021 | None | | | |
| US | 2018206011 | A1 | 19 July 2018 | US | 10567858 | B2 | 18 February 2020 |
| | | | | WO | 2017041514 | A1 | 16 March 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310956661